# EUROPÄISCHE PATENTSCHRIFT

(11) **EP 0 605 463 B1**
(45) Veröffentlichungstag und Bekanntmachung des Hinweises auf die Patenterteilung: **28.06.1995**
(21) Anmeldenummer: 92918726.8
(22) Anmeldetag: 02.09.1992
(51) Int. Cl.: B60T 8/48

(54) **HYDRAULISCHE BREMSANLAGE, INSBESONDERE FÜR KRAFTFAHRZEUGE MIT EINER DIFFERENTIALSPERRE**
HYDRAULIC BRAKING SYSTEM WITH DIFFERENTIAL LOCK, ESPECIALLY FOR MOTOR VEHICLES
SYSTEME HYDRAULIQUE DE FREINAGE A BLOCAGE DU DIFFERENTIEL, NOTAMMENT POUR VEHICULES A MOTEUR

(30) Priorität: 30.09.1991 DE 4132470
(43) Veröffentlichungstag der Anmeldung: 13.07.1994
(73) Patentinhaber: ROBERT BOSCH GMBH, 70442 Stuttgart (DE)
(72) Erfinder: WILLMANN, Karl-Heinz, D-7149 Freiberg (DE)
(86) Internationale Anmeldenummer: DE9200730
(87) Internationale Veröffentlichungsnummer: WO9307035

(56) Entgegenhaltungen:
- EP-A- 0 460 408
- DE-C- 3 900 851
- DE-C- 4 009 640

## Beschreibung

### Stand der Technik

Die Erfindung geht aus von einer hydraulischen Bremsanlage, insbesondere für Kraftfahrzeuge, mit einer Einrichtung zur Blockierschutzregelung sowie zur Erzeugung einer Differentialsperre durch Bremseneingriff nach der Gattung des Patentanspruchs.

Es ist schon eine hydraulische Bremsanlage vorgeschlagen worden (DE-A1-40 34 112), bei der in einem den beiden Antriebsrädern des Fahrzeugs zugeordneten Bremskreis sowohl Blockierschutzregelbetrieb als auch Antriebsschlupfregelbetrieb möglich ist. Hierzu schaltet das Steuergerät nach einem vorgegebenen Regelalgorythmus die entsprechenden Elemente der Bremsanlage. Zur gleichzeitigen Antriebsschlupfbegrenzung an beiden Antriebsrädern ist es erforderlich, die Bremsanlage mit je einem der entsprechenden Radbremse zugeordneten Auslaßventil auszustatten und das Steuergerät in geeigneter Weise auszubilden. Fahrzeughersteller verlangen jedoch auch Bremsanlagen, welche zur Schlupfbegrenzung einen auf ein Antriebsrad beschränkten Bremseneingriff zulassen.

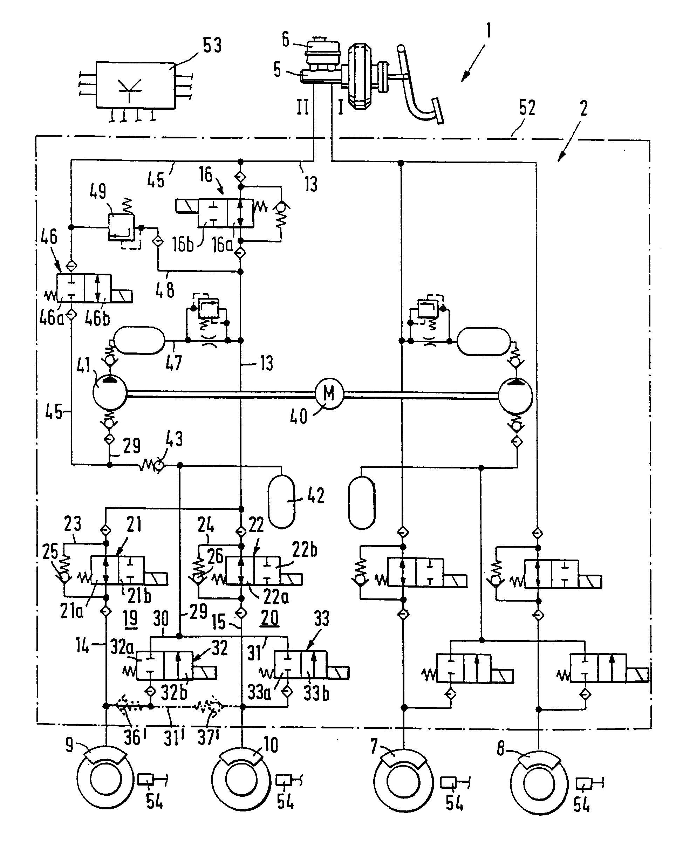

Aus DE-C1-40 09 640, Figur 3 ist eine hydraulische Bremsanlage mit den gattungsgemäßen Merkmalen des Patentanspruchs bekannt, bei der in allen Phasen der Bremsdruckmodulation bei Antriebsschlupfregelung die Hochdruckpumpe über das in seine Durchlaßstellung geschaltete Ladeventil Druckmittel ansaugt und in die gegen den Hauptbremszylinder mittels des Absperrventils abgesperrte Bremsleitung fördert. Nicht von der Radbremse des Antriebsschlupf unterworfenen Fahrzeugrades abgenommenes Druckmittel muß daher über ein Druckbegrenzungsventil von der Bremsleitung zur Saugleitung abgesteuert werden. Außerdem wird in der Phase für Druckabbau das der betroffenen Radbremse zugeordnete Auslaßventil zur Druckentlastung herangezogen.

Außerdem ist aus DE-C1-39 00 851, Figur 1 eine Antriebsschlupfregeleinrichtung einer hydraulischen Bremsanlage bekannt, bei der eine Hochdruckpumpe in der Phase für Bremsdruckaufbau über ein in die Durchlaßstellung geschaltetes Ladeventil Druckmittel aus einem Hauptbremszylinder ansaugt und in eine zu Radbremsen führende Bremsleitung fördert, die gegen den Hauptbremszylinder von einem Absperrventil überwacht ist. Die Druckeinsteuerung in die Antriebsschlupf unterworfene Radbremse erfolgt mittels eines zugeordneten Einlaßventils einer Ventilanordnung für die Bremsdruckmodulation, deren Auslaßventil in allen Phasen der Druckmodulation bei Antriebsschlupfregelung in seiner Absperrstellung verharrt. Der Druckabbau in der Radbremse wird mittels des Einlaßventils und des Absperrventils gesteuert. Die Ansteuerung der Hochdruckpumpe und des Ladeventils in den Phasen für Druckhalten und Druckabbau sowie des Absperrventils in der erstgenannten Phase ist nicht offenbart.

### Vorteile der Erfindung

Die erfindungsgemäße Bremsanlage mit den kennzeichnenden Merkmalen des Patentanspruchs hat demgegenüber den Vorteil, daß das Steuergerät vereinfacht ausgebildet sein kann, weil das Auslaßventil oder die Auslaßventile der Ventilanordnungen an der Modulation des Bremsdrucks nicht beteiligt ist bzw. nicht beteiligt sind. von Vorteil ist außerdem die Maßnahme, daß die Pumpe in Phasen, in denen kein Bremsdruck aufgebaut werden muß, nicht fördert, was sich günstig auf den Leistungsbedarf der Pumpe und deren Betriebsgeräusch auswirkt. Ferner ist vorteilhaft, daß der in die Radbremse eingesteuerte Bremsdruck dem Förderdruck der Hochdruckpumpe entspricht.

### Zeichnung

Ein Ausführungsbeispiel der Erfindung ist anhand eines in der Zeichnung dargestellten Schaltbildes einer hydraulischen Bremsanlage für Kraftfahrzeuge in der nachfolgenden Beschreibung näher erläutert.

### Beschreibung des Ausführungsbeispiels

Das in der Zeichnung dargestellte Ausführungsbeispiel betrifft eine hydraulische Bremsanlage 1 mit einer Einrichtung 2 zur Blockierschutzregelung sowie zur Erzeugung einer Differentialsperre durch Bremseneingriff.

Die Bremsanlage 1 weist einen pedalbetätigbaren Hauptbremszylinder 5 mit einem Druckmittel-Vorratsbehälter 6 auf. Ein erster Bremskreis I der Bremsanlage 1 ist Radbremsen 7, 8 nicht angetriebener Fahrzeugräder, zum Beispiel der Vorderachse des Fahrzeugs, zugeordnet. An einen zweiten Bremskreis II sind die Radbremsen 9, 10 angetriebener Fahrzeugräder, zum Beispiel der Hinterachse des Fahrzeugs, angeschlossen. Die Bremsanlage 1 weist daher die sogenannte TT-Bremskreisaufteilung auf. Der im Zusammenhang mit der erfindungsgemäßen Lösung stehende Bremskreis II ist nachfolgend näher erläutert:

Der Bremskreis II hat eine vom Hauptbremszylinder 5 ausgehende, verzweigte Bremsleitung 13. Ein erster Bremsleitungszweig 14 führt zur Radbremse 9; an einen zweiten Bremsleitungszweig 15 ist die Radbremse 10 angeschlossen. In der Bremsleitung 13 ist hauptbremszylinderseitig ein Absperrventil 16 in Form eines 2/2-Wegeventils mit einer federbetätigten Durchlaßstellung 16a und einer elektromagnetisch schaltbaren Sperrstellung 16b angeordnet.

Jeder Radbremse 9, 10 des Bremskreises II ist eine Ventilanordnung 19, 20 zur Phasen für Druckaufbau, Druckhalten und Druckabbau umfassenden Bremsdruckmodulation zugeordnet. Die Ventilanordnungen 19, 20 besitzen je ein im entsprechenden Bremsleitungszweig 14, 15 angeordnetes Einlaßventil 21 bzw. 22. Diese sind als 2/2-Wegeventile mit einer federbetätigten Durchlaßstellung 21a bzw. 22a und einer elektromagnetisch schaltbaren Sperrstellung 21b bzw. 22b ausgebildet. Jedes Einlaßventil 21, 22 ist durch eine Bypass-Leitung 23 bzw. 24 mit einem darin angeordneten Rückschlagventil 25 bzw. 26 überbrückt. Das jeweilige Rückschlagventil 25, 26 hat eine Durchlaßrichtung von der entsprechenden Radbremse 9, 10 zum Hauptbremszylinder 5.

Zwischen dem jeweiligen Einlaßventil 21, 22 und den Radbremsen 9, 10 geht von den zugeordneten Bremsleitungszweigen 14, 15 eine verzweigte Rückführleitung 29 aus. Ein Rückführleitungszweig 30 ist an den Bremsleitungszweig 14 angeschlossen, der andere Rückführleitungszweig 31 an den Bremsleitungszweig 15. In jedem Rückführleitungszweig 30, 31 ist ein zur entsprechenden Ventilanordnung 19 bzw. 20 gehörendes Auslaßventil 32 bzw. 33 angeordnet. Die Auslaßventile 32, 33 sind ebenfalls als 2/2-Wegeventile ausgebildet; sie haben eine federbetätigte Sperrstellung 32a bzw. 33a und eine elektromagnetisch schaltbare Durchlaßstellung 32b bzw. 33b.

Abweichend hiervon kann den beiden Radbremsen 9, 10 ein gemeinsames Auslaßventil 32 der beiden Ventilanordnungen 19, 20 zugeordnet sein. Das Auslaßventil 33 und der Rückführleitungszweig 31 kommen dann in Wegfall. Wie mit einer strichpunktierten Linie angedeutet ist bei dieser Variante ein vom Rückführleitungszweig 30 zwischen dessen Anschluß an den Bremsleitungszweig 14 und dem Auslaßventil 32 ausgehender Rückführleitungszweig 31' radbremsseitig zum Bremsleitungszweig 15 geführt. Beiderseits des Anschlußpunktes des Rückführleitungszweiges 31' am Rückführleitungszweig 30 ist in jede der beiden Leitungszweige ein Rückschlagventil 36' bzw. 37' mit Durchlaßrichtung vom entsprechenden Bremsleitungszweig 14 bzw. 15 zum Auslaßventil 32 angeordnet.

Die Rückführleitung 29 führt zur Saugseite einer durch einen elektrischen Antriebsmotor 40 antreibbaren, selbstansaugend ausgebildeten Hochdruckpumpe 41. Zwischen der Saugseite der Hochdruckpumpe 41 und den beiden Auslaßventilen 32, 33 der Ventilanordnungen 19, 20 ist eine Speicherkammer 42 zur Aufnahme von den Radbremsen 9, 10 entnommenem Druckmittel an die Rückführleitung 29 angeschlossen. Außerdem ist in der Rückführleitung 29 zwischen der Hochdruckpumpe 41 und dem Anschluß der Speicherkammer 42 ein gegen die Hochdruckpumpe öffnendes, federbelastetes Rückschlagventil 43 angeordnet.

Saugseitig ist die Hochdruckpumpe 41 durch eine Saugleitung 45 für Druckmittel mittelbar mit dem Hauptbremszylinder 5 verbunden, und zwar durch Anschluß der Saugleitung 45 zwischen dem Hauptbremszylinder 5 und dem Absperrventil 16 an die Bremsleitung 13. In der Saugleitung 45 ist ein als 2/2-Wegeventil ausgebildetes Ladeventil 46 mit einer federbetätigten Sperrstellung 46a und einer elektromagnetisch schaltbaren Durchlaßstellung 46b angeordnet. Druckseitig geht von der Hochdruckpumpe 41 eine Förderleitung 47 für Druckmittel aus, welche zwischen dem Absperrventil 16 und den Ventilanordnungen 19, 20 in die Bremsleitung 13 mündet. Außerdem ist eine von der Bremsleitung 13 zwischen dem Anschluß der Förderleitung 47 und dem Absperrventil 16 ausgehende, zur Saugleitung 45 zwischen dem Ladeventil 46 und dem Hauptbremszylinder 5 führende Überströmleitung 48 mit einem Druckbegrenzungsventil 49 vorgesehen. Das Druckbegrenzungsventil 49 ist auf einen den maximalen Förderdruck der Hochdruckpumpe 41 begrenzenden Ansprechdruck eingestellt.

Die zwischen dem Hauptbremszylinder 5 und den Radbremsen 7 bis 10 angeordneten Elemente der hydraulischen Bremsanlage 1 sind Teil der Einrichtung 2 zur Blockierschutzregelung sowie zur Erzeugung einer Differntialsperre durch Bremseneingriff. Sie sind in einem sogenannten Hydroaggregat 52 zusammengefaßt` welches in der Zeichnung durch einen strichpunktierten Linienzug angedeutet ist. Außerdem gehören zur Einrichtung 2 ein elektronisches Steuergerät 53 sowie den einzelnen Fahrzeugrädern zugeordnete Raddrehzahlsensoren 54. Das Steuergerät 53 vermag Signale der Raddrehzahlsensoren 54 auszuwerten und in Schaltsignale für den Antriebsmotor 40 sowie die diversen elektromagnetisch betätigbaren Ventile der Bremsanlage 1 umzusetzen. Dabei ist im Bremskreis II sowohl Blockierschutzregelbetrieb als auch die Erzeugung einer Differentialsperre an den angetriebenen Fahrzeugsrädern durch Bremseneingriff möglich. Im nicht näher erläuterten Bremskreis I ist dagegen lediglich Blockierschutzregelbetrieb durchfuhrbar.

Die im Bremskreis II der Bremsanlage 1 möglichen Betriebsarten haben den nachfolgend erläuterten Funktionsablauf:
Bei einer normalen, vom Fahrzeug ausgelösten Bremsung nehmen die Ventile ihre gezeichnete Stellung ein. Außerdem ist der elektrische Antriebsmotor 40 außer Betrieb. Der durch Pedalbetätigung im Hauptbremszylinder 5 erzeugte Druck wird (im Bremskreis II) durch Verschieben von Druckmittel-Teilmengen durch die Bremsleitung 13, und die Bremsleitungszweige 14, 15 in die Radbremsen 9, 10 eingesteuert.

Beide Radbremsen 9, 10 tragen zur Abbremsung des Fahrzeugs bei. Durch Entlasten des Bremspedals fließen Druckmittel-Teilmengen von den Radbremsen 9, 10 zurück zum Hauptbremszylinder 5.

Tritt bei einer solchen Bremsung zum Beispiel am der Radbremse 9 zugeordneten Fahrzeugrad Blockiergefahr auf, so wird dies aufgrund der Signale der Raddrehzahlsensoren 54 vom elektronischen Steuergerät 53 erkannt. Nach einem im Steuergerät 53 abgespeicherten Regelalgorythmus wird in an sich bekannter Weise der Bremsdruck in der Radbremse 9 in Phasen für Druckabbau, Druckhalten und Druckaufbau moduliert.

Tritt beim Anfahren und Beschleunigen des Fahrzeugs unzulässig großer Schlupf an den angetriebenen Fahrzeugrädern auf, so wird dies vom Steuergerät 53 gleichfalls aufgrund der Signale der Raddrehzahlsensoren 54 erkannt. Dabei werden die Radgeschwindigkeiten der beiden Antriebsräder miteinander verglichen. Sobald eine bestimmte Geschwindigkeitsdifferenz überschritten ist, wird ein Bremseneingriff am schneller durchdrehenden Rad eingeleitet, um die Antriebskraft über das Differential des Fahrzeugs auf das andere Antriebsrad zu übertragen. Dabei sind folgende Betriebsweisen möglich:

Zum Abbremsen des beispielsweise der Radbremse 10 zugeordneten Antriebsrades wird in einer ersten Betriebsweise der Einrichtung 2 zum Erzeugen einer Differentialsperre durch Bremseneingriff die Hochdruckpumpe 41 wahrend des gesamten Regelvorganges eingeschaltet, während die Auslaßventile 32, 33 der Ventilanordnungen 19, 20 (bzw. das Auslaßventil 32 der vereinfachten Variante) in der Sperrstellung 32a, 33a verbleiben.

In der Phase für Druckaufbau in der Radbremse 10 werden das Absperrventil 16 in die Sperrstellung 16b, das Ladeventil 46 in die Durchlaßstellung 46a und das der anderen Radbremse 9 zugeordnete Einlaßventil 21 in die Sperrstellung 21b geschaltet während das der Radbremse 10 zugeordnete Einlaßventil 22 in der Durchlaßstellung 22a verbleibt. Von der Hochdruckpumpe 41 aus dem Hauptbremszylinder 5 angesaugtes Druckmittel wird in die Bremsleitung 13 gefördert und Bremsdruck in der Radbremse 10 aufgebaut. (Bei der Variante verhindert das Rückschlagventil 36' im Rückführleitungszweig 30 die Einsteuerung von Bremsdruck in die Radbremse 9.)

In der Phase für Druckhalten verbleiben das Absperrventil 16 in der Sperrstellung 16b und das der Radbremse 9 zugeordnete Einlaßventil 21 in der Sperrstellung 21b, während das Ladeventil 46 in die Sperrstellung 46a geschaltet wird. Das der Radbremse 10 zugeordnete Einlaßventil 22 kann eine beliebige Stellung einnehmen. Da die Förderung der Hochdruckpumpe 41 unterdrückt ist, tritt im wesentlichen keine Änderung des in die Radbremse 9 eingesteuerten Bremsdrucks ein.

In der Phase für Druckabbau in der Radbremse 10 verbleiben das Ladeventil 46 in der Sperrstellung 46a sowie das der Radbremse 9 zugeordnete Einlaßventil 21 in der Sperrstellung 21b. Das Absperrventil 16 wird in die Durchlaßstellung 16a geschaltet; die Stellung des der Radbremse 10 zugeordneten Einlaßventils 22 kann beliebig sein. Durch Verschieben von Druckmittel-Teilmengen durch das Einlaßventil 22 oder durch die Bypassleitung 24 zurück zum Hauptbremszylinder 5 tritt eine Entlastung der Radbremse 10 vom Bremsdruck ein.

Bei Beendigung des Regelbetriebes werden die Hochdruckpumpe 41 abgeschaltet und die Ventile des Bremskreises II in die gezeichneten Stellungen zurückgeführt.

Bei dieser Betriebsweise wird aufgrund der unterdrückten Pumpenförderung in den Phasen für Druckhalten und Druckabbau ein vermindertes Geräusch sowie eine verminderte Verlustleistung der Hochdruckpumpe 41 erzielt, weil kein überschüssiges Druckmittelvolumen über das Druckbegrenzungsventil 49 abgesteuert werden muß.

In einer zweiten Betriebsweise der Einrichtung 2 zum Erzeugen einer Differentialsperre durch Bremseneingriff sind die Auslaßventile 32, 33 (bzw. das Auslaßventil 32 der Variante) ebenfalls nicht am Regelvorgang beteiligt. Während des gesamten Regelvorgangs nimmt das Ladeventil 46 seine Durchlaßstellung 46b ein; außerdem ist die Hochdruckpumpe 41 eingeschaltet.

Zum Einsteuern von Bremsdruck in die Radbremse 10 in der Phase für Druckaufbau werden das Absperrventil 16 in die Sperrstellung 16b und das der Radbremse 9 zugeordnete Einlaßventil 21 in die Sperrstellung 21b geschaltet, während das Einlaßventil 22 seine Durchlaßstellung 22a beibehält.

In der Phase für Druckhalten verbleiben das Absperrventil 16 in der Sperrstellung 16b und das Einlaßventil 21 in der Sperrstellung 21b. Das Einlaßventil 22 im zur Radbremse 10 führenden Bremsleitungszweig 15 wird ebenfalls in die Sperrstellung 22b geschaltet. Von der Hochdruckpumpe 41 weiterhin gefördertes Druckmittel wird über das Druckbegrenzungsventil 49 abgesteuert.

In der Phase für Druckabbau in der Radbremse 10 wird das Absperrventil 16 in die Durchlaßstellung 16a geschaltet. Das der Radbremse 9 zugeordnete Einlaßventils 21 verbleibt in der Sperrstellung 21b. Der Bremsdruck in der Radbremse 10 kann sich nun bei seine Sperrstellung 22b einnehmendem Einlaßventil 22 durch die Bypassleitung 24 und das Rückschlagventil 26 oder bei in seine Durchlaßstellung 22a geschalteten Einlaßventil 22 durch dieses zum Hauptbremszylinder 5 abbauen.

Bei Beenden des Regelvorgangs wird die Hochdruckpumpe 41 abgeschaltet; ebenso werden die Ventile im Bremskreises II in ihre gezeichnete Stellungen zurückgeführt.

Wegen der Nichtbeteiligung der Absperrventile 32, 33 (bzw. des Absperrventils 32 bei der Variante) in den beiden Betriebsweisen wird außerdem in Phasen für Druckabbau verhindert, daß zum Beispiel bei vom Fahrzeugführer ausgelöstem Einbremsen Druckmittel in die Speicherkammer 42 abströmt und in einem unmittelbar folgenden Blockierschutzregelbetrieb das wirksame Aufnahmevolumen der Speicherkammer mindert. Das Rückschlagventil 43 in der Rückführleitung 29, welches bei eingeschalteter Hochdruckpumpe 41 und in Durchlaßstellung 32b bzw. 33b geschalteten Auslaßventilen 32 bzw. 33 unzulässigen Unterdruck in den Radbremsen 9, 10 verhindert, stellt bei Einbremsen mit in die Durchlaßstellung 46b geschaltetem Ladeventil 46 in allen beiden Betriebsweisen zur Erzeugung einer Differentialsperre durch Bremseneingriff sicher, daß kein Druckmittel durch die Saugleitung 45 in die Speicherkammer 42 fließt.

## Patentansprüche

1. Hydraulische Bremsanlage (1), insbesondere für Kraftfahrzeuge, mit einer Einrichtung (2) zur Blockierschutzregelung sowie zur Erzeugung einer Differentialsperre durch Bremseneingriff, welche umfaßt:
- einen Hauptbremszylinder (5), von dem wenigstens eine sich zu zwei Radbremsen (9, 10) eines Bremskreises II angetriebener Fahrzeugräder verzweigende Bremsleitung (13) ausgeht,
- den Radbremsen (9, 10) zugeordnete Ventilanordnungen (19, 20) zur Phasen für Druckaufbau, Druckhalten und Druckabbau umfassenden Bremsdruckmodulation, bestehend aus je einem im jeweiligen Bremsleitungszweig (14, 15) angeordneten Einlaßventil (21, 22) mit einer Durchlaßstellung (21a, 22a) als Ruhestellung und einer Sperrstellung (21b, 22b) sowie wenigstens einom Auslaßventil (z.B. 32) mit einer Sperrstellung (32a) als Ruhestellung und einer Durchlaßstellung (32b), wobei in der Phase für Druckaufbau das Einlaßventil (22) der Radbremse (z.B. 10) des abzubremsenden Fahrzeugrades die Durchlaßstellung (22a) und das Einlaßventil (21) der Radbremse (9) des anderen Fahrzeugrades in allen Phasen der Bremsdruckmodulation die Sperrstellung (21b, 16b) einnehmen,
- eine das jeweilige Einlaßventil (21, 22) umgehende Bypassleitung (23, 24) mit einem Rückschlagventil (25, 26), welches Durchfluß von der Radbremse (9, 10) zum Hauptbremszylinder (5) zuläßt,
- ein in der Bremsleitung (13) angeordnetes Absperrventil (16) mit einer Durchlaßstellung (16a) als Ruhestellung und einer in den Phasen für Druckaufbau und Druckhalten eingenommenen Sperrstellung (16b),
- eine selbstansaugende Hochdruckpumpe (41), welche saugseitig mit einer Saugleitung (45) für Druckmittel zwischen dem Hauptbremszylinder (5) und dem Absperrventil (16) sowie druckseitig mit einer Förderleitung (47) für Druckmittel zwischen dem Absperrventil (16) und den Radbremsen (9, 10) an die Bremsleitung (13) angeschlossen und während der Dauer der Differentialsperre durch Bremseneingriff angetrieben ist,
- ein in der Saugleitung (45) angeordnetes Ladeventil (46) mit einer Sperrstellung (46a) als Ruhestellung und einer in der Phase für Druckaufbau eingenommenen Durchlaßstellung (46b),
- eine zur Saugseite der Hochdruckpumpe (41) führende Rückführleitung (29), welche mit Leitungszweigen (30, 31) zwischen der Radbremse (9, 10) und dem Einlaßventil (21, 22) an den jeweiligen Bremsleitungszweig (14, 15) angeschlossen ist,
- eine an die Rückführleitung (29) angeschlossene Speicherkammer (42) zur Aufnahme von den Radbremsen (9, 10) entnommenem Druckmittel,
- ein Steuergerät (53) zum Schalten der Hochdruckpumpe (41), des Absperrventils (16), des Ladeventils (46) sowie der Ventile (21, 22, 32) der Ventilanordnungen (19, 20) zur Bremsdruckmodulation in Abhängigkeit vom Raddrehverhalten,
gekennzeichnet durch die folgenden Merkmale:
- in der Phase für Druckhalten nimmt das Ladeventil (46) seine Sperrstellung (46a) ein,
- weisen in der Phase für Druckabbau das Ladeventil (46) die Sperrstellung (46a) sowie das Absperrventil (16) die Durchlaßstellung (16a) auf,
- verharrt in allen Phasen der Bremsdruckmodulation das wenigstens eine Auslaßventil z.B. (32) in der Sperrstellung (32a).

## Claims

1. Hydraulic brake system (1), particularly for motor vehicles, with a device (2) for anti-lock control and for the production of a differential lock by means of brake engagement, which comprises:
- a main brake cylinder (5), from which at least one brake line (13) branching to two wheel brakes (9, 10) of a brake circuit II of driven vehicle wheels emanates,
- valve arrangements (19, 20), assigned to the wheel brakes (9, 10), for brake-pressure modulation comprising phases for pressure build-up, pressure maintenance and pressure reduction, each comprising an inlet valve (21, 22) arranged in the respective brake-line branch (14, 15) and having a through-flow position (21a, 22a) as the rest position and a shut-off position (21b, 22b) and each further comprising an outlet valve (e.g. 32) with a shut-off position (32a) as the rest position and a through-flow position (32b), the inlet valve (22) of the wheel brake (e.g. 10) of the vehicle wheel to be braked assuming the through-flow position (22a) in the phase for pressure build-up, and the inlet valve (21) of the wheel brake (9) of the other vehicle wheel assuming the shut-off position (21b, 16b) in all phases of brake-pressure modulation,
- a bypass line (23, 24) which bypasses the respective inlet valve (21, 22) and has a non-return valve (25, 26) which allows through-flow from the wheel brake (9, 10) to the main brake cylinder (5),
- a shut-off valve (16) arranged in the brake line (13) and having a through-flow position (16a) as a rest position and a shut-off position (16b) which is assumed in the phases for pressure build-up and pressure maintenance,
- a self-priming high-pressure pump (41) which is connected to the brake line (13) on the inlet side by means of an inlet line (45) for pressure medium between the main brake cylinder (5) and the shut-off valve (16) and is connected to the brake line (13) on the delivery side by means of a delivery line (47) for pressure medium between the shut-off valve (16) and the wheel brakes (9, 10) and is driven during the period of differential locking by brake engagement,
- a charging valve (46) arranged in the inlet line (45) and having a shut-off position (46a) as the rest position and a through-flow position (46b) assumed in the phase for pressure build-up,
- a return line (29) which leads to the inlet side of the high-pressure pump (41) and is connected to the respective brake-line branch (14, 15) between the wheel brake (9, 10) and the inlet valve (21, 22) by means of line branches (30, 31),
- an accumulator chamber (42) which is connected to the return line (29) and is intended to receive pressure medium taken from the wheel brakes (9, 10),
- a control unit (53) for switching the high-pressure pump (41), the shut-off valve (16), the charging valve (46) and the valves (21, 22, 32) of the valve arrangements (19, 20) for the purpose of brake-pressure modulation as a function of the wheel rotational behaviour,
characterized by the following features:
- in the phase for pressure maintenance, the charging valve (46) assumes its shut-off position (46a),
- in the phase for pressure reduction, the charging valve (46) is in the shut-off position (46a) and the shut-off valve (16) is in the through-flow position (16a),
- the outlet valve or valves, e.g. (32), remains or remain in the shut-off position (32a) in all phases of brake-pressure modulation.

## Revendications

1. Système hydraulique de freinage (1) pour véhicules à moteur avec une installation (2) servant à la régulation de la protection contre le blocage ainsi qu'à la production d'un blocage du différentiel sous l'action des freins, système qui comprend :
- un maître cylindre de freinage (5) d'où part au moins une canalisation de freinage (13) se ramifiant vers les deux freins de roues (9, 10) d'un circuit de freinage II des roues motrices du véhicule,
- des systèmes de soupapes (19, 20) associés aux freins de roues (9, 10), servant à la modulation de la pression de freinage comprenant des phases correspondant à la montée en pression, au maintien de la pression et à la chute de la pression, et qui consistent respectivement en une soupape d'admission (21, 22) disposée dans la branche correspondante de la canalisation de freinage (14, 15) avec une position de passage (21a, 22a) servant de position de repos et une position de fermeture (21b, 22b), ainsi qu'au moins une soupape d'échappement (par exemple 32) avec une position de fermeture (32a) servant de position de repos et une position de passage (32b), la soupape d'admission (22) du frein de roue (par exemple 10) de la roue du véhicule à freiner prenant la position de passage (22a) dans la phase correspondant à la montée en pression, et la soupape d'admission (21) du frein de roue (3) de l'autre roue du véhicule prenant la position de fermeture (21b, 16b) dans toutes les phases de la modulation de la pression de freinage,
- une canalisation en dérivation (23, 24) contournant la soupape d'admission correspondante (21, 22), avec un clapet anti-retour (25, 26) qui permet le passage du fluide depuis le frein de roue (9, 10) vers le maître cylindre de freinage (5),
- une soupape d'arrêt (16) disposée dans la canalisation de frein (13) avec une position de passage (16a) comme position de repos et une position de fermeture (16b) prise dans les phases correspondant à la montée en pression et au maintien de la pression,
- une pompe haute pression auto-aspirante (41) qui est raccordée, du côté de l'aspiration, à une conduite d'aspiration (45) du fluide sous pression située entre le maître cylindre de freinage (5) et la soupape d'arrêt (16), ainsi que, du côté sous pression à la canalisation de frein (13) par une conduite de refoulement (14) du fluide sous pression située entre la soupape d'arrêt (16) et les freins de roues (9, 10), et qui est entraînée pendant la durée du blocage du différentiel par l'action de freinage,
- une soupape de charge (46) disposée dans la conduite d'aspiration (45) avec une position de blocage (46a) servant de position de repos et une position de passage (46b) prise dans la phase correspondant à la montée en pression,
- une canalisation de retour (29) menant au côté aspiration de la pompe haute pression (41), qui est raccordée aux branches de la canalisation (30, 31) situées entre le frein de roues (9, 10) et la soupape d'admission (21, 22) sur la branche de la canalisation de frein (14, 15) correspondante,
- une chambre d'accumulation (42), raccordée à la canalisation de retour (29), qui sert à recueillir le fluide sous pression dégorgé par les freins de roues (9, 10),
- un appareil de commande (53) servant à brancher la pompe haute pression (41), qui commande la soupape d'arrêt (16a), la soupape de charge (46), ainsi que les soupapes (21, 22, 32) des systèmes de soupapes (19, 20) servant à moduler la pression de freinage en fonction du comportement de la vitesse de rotation des roues,
système hydraulique de freinage caractérisé par les particularités suivantes :
- dans la phase qui correspond au maintien de la pression, la soupape de charge (46) prend sa position de fermeture (46a),
- dans la phase qui correspond à la chute de la pression, la soupape de charge (46) prend sa position de fermeture (46a) et la soupape d'arrêt (16) prend sa position de passage (16a),
- dans toutes les phases de la modulation de la pression de freinage, l'une au moins des soupapes d'échappement par exemple (32) reste dans la position de fermeture (32a).
